# EUROPEAN PATENT APPLICATION

(11) **EP 1 475 583 A1**
(43) Date of publication of application: **10.11.2004**
(21) Application number: 04251250.9
(22) Date of filing: 04.03.2004
(51) Int. Cl.: F25B 21/02, F24C 15/10, A47J 39/00

(54) **Tempering plate for heating or cooling food**

(30) Priority: 07.05.2003 KR 2003028839
(71) Applicant: Samsung Electronics Co., Ltd., Suwon-si, Gyeonggi-do (KR)
(72) Inventor: Yang, Ha Yeong, Suwon-City, Kyunggi-Do (KR)
(74) Representative: Robinson, Ian Michael

(57) **Abstract**

A cooking apparatus, enclosed in a casing (10) having a temperature adjusting unit (30) mounted on the casing (10), with an upper portion thereof protruding from an upper surface of the casing (10) on which food is placed, the temperature adjusting unit (30) exchanging heat with the food to heat or cool the food. The temperature adjusting unit advantageously comprises a peltier element (31).

## Description

The present invention relates, in general, to a cooking apparatus and, more particularly, to a cooking apparatus that heats and cools food.

In general, a cooking apparatus is an apparatus that includes a heat generating unit to generate heat, and cooks food by heating the food using the heat generated by the heat generating unit.

Accordingly, after cooking has been completed, food heated and cooked by the heat generating unit generally has a high temperature. When the high temperature food needs to be cooled, the food may be cooled while being accommodated in a refrigerator. However, if the high temperature food is cooled while being accommodated in the refrigerator, a temperature in the refrigerator is rapidly increased by heat emitted from the food and, therefore, foodstuffs stored in the refrigerator may spoil.

Accordingly, high temperature food should be quickly cooled while being exposed to outside air, so that an excessive period of time is not required to cool the food in the refrigerator.

It is an aim of the present invention to provide a cooking apparatus that cools food, which has been heated to a high temperature, within a short time.

Other aims and/or advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

In one aspect of the present invention, there is provided a cooking apparatus, including a casing forming an enclosure of the cooking apparatus; and a temperature adjusting unit mounted on the casing, with an upper portion thereof protruding from an upper surface of the casing on which food is placed, the temperature adjusting unit exchanging heat with the food to heat or cool the food.

Preferably, the temperature adjusting unit includes a peltier element to draw heat at a first end thereof and emit the heat at a second end thereof.

The temperature adjusting unit further includes a heat transferring member protruding from the upper surface of the casing on which food is placed, the heat transferring member 32 drawing or emitting the heat according to an operation of the peltier element.

The temperature adjusting unit further includes a heat emitting member mounted below the peltier element to allow the heat to be exchanged between the peltier element and air; and a ventilation fan mounted below the heat emitting member to draw external air into the casing by generating a ventilation force that exchanges the heat with the heat emitting member.

The temperature adjusting unit further includes a temperature adjusting switch to set a temperature of the food, and a temperature sensor to detect the temperature of the food.

The cooking apparatus further includes a heat generating unit to cook the food by generating heat.

The heat generating unit includes a coil that is supplied with alternating current power and generates a magnetic field to heat the food by induction heating.

The heat generating unit includes an electrical heating wire to heat the food by electric resistance.

The heat generating unit is a gas combustion heat generating unit that generates the heat by burning gas.

Also according to the present invention there is provided a temperature adjusting unit for a cooking apparatus, including a peltier element drawing heat at a first end thereof and emitting the heat at a second end thereof; a heat transferring member protruding from an upper surface of the cooking apparatus on which food is placed, and drawing or emitting the heat according to operation of the peltier element; and a heat emitting member mounted below the peltier element to enable the heat to be exchanged between the peltier element and air.

Further according to the present invention there is provided a method of heating and cooling food in a container using a cooking apparatus having a heat generating unit and a temperature adjusting unit with a peltier element, the method including placing the container on the heat generating unit and applying alternating current power to the heat generating unit to heat the food in the container; transferring the container from the heat generating unit to the temperature adjusting unit and setting a desired temperature of the food; applying direct current (DC) power to the peltier element when a temperature of the container becomes greater than the desired temperature to draw the heat of the food to the peltier element to cool the food; stopping the supply of DC power to the peltier element when the temperature of the container reaches the desired temperature; and applying the DC power to the peltier element when the temperature of the container becomes less than the desired temperature, a current direction of the DC power reversing to transfer the heat of the peltier element to the food to heat the food.

For a better understanding of the invention, and to show how embodiments of the same may be carried into effect, reference will now be made, by way of example, to the accompanying diagrammatic drawings in which:

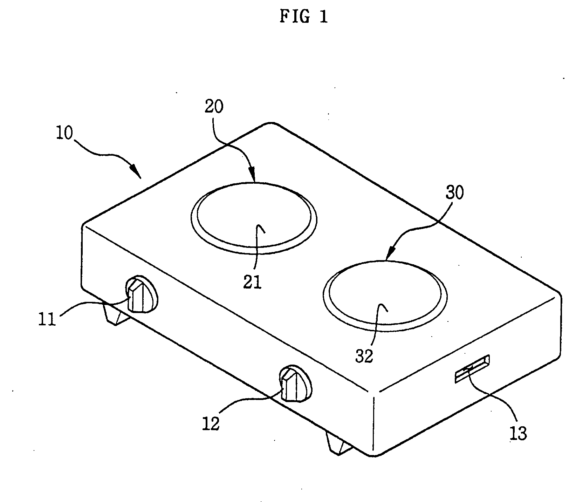

Figure 1 is a perspective view of a cooking apparatus, according to the embodiment of the present invention; and
Figure 2 is a partial section view showing a construction of a temperature adjusting unit of Figure 1.

Reference will now be made in detail to the embodiment of the present invention, examples of which are illustrated in the accompanying drawings, wherein like reference numerals refer to the like elements throughout. The embodiment is described below to explain the present invention by referring to the figures.

A cooking apparatus according to the embodiment of the present invention includes a casing 10 that forms an enclosure of the cooking apparatus, a heat generating unit 20 that heats food by generating heat in the casing 10, and a temperature adjusting unit 30 that adjusts a temperature of the food by drawing heat from the food or applying heat to the food according to a current direction of supplied direct current (DC) power.

The casing 10 is shaped generally as a box. The heat generating unit 20 and the temperature adjusting unit 30 partially protrude from an upper surface of the casing 10 to apply heat to food and draw heat from the food. A heat generating switch 11 and a temperature adjusting switch 12 that control operations of the heat generating unit 20 and the temperature adjusting unit 30, respectively, are mounted on a front of the casing 10.

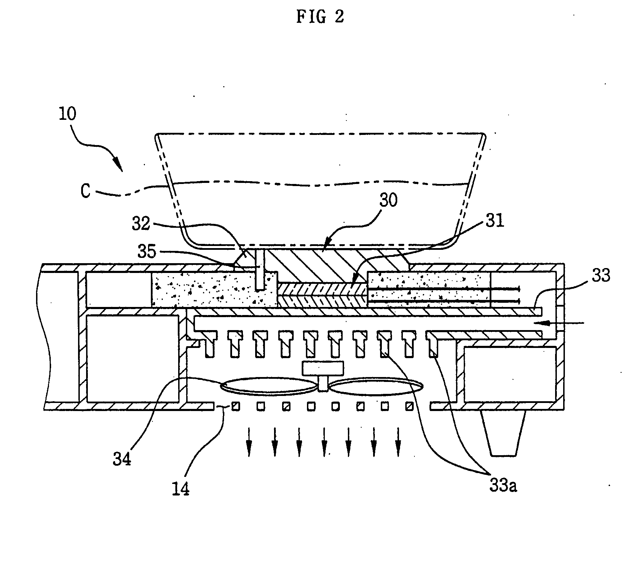

The heat generating unit 20 includes a heat generating member 21 that has a working coil (not shown) therein and cooks food by induction heating. When alternating current (AC) power is applied to the working coil, a magnetic field is generated and, thereby, heat is generated in a container C (Figure 2) made of a metallic material and containing food, so that the food is heated and cooked.

The temperature adjusting unit 30 includes a peltier element 31 that draws heat at a first end thereof and emits the heat at a second end thereof, and a heat transferring member 32 that transfers the heat of the food to the peltier element 31 or transfers the heat of the peltier element 31 to the food.

The peltier element 31 is an alloy of two different kinds of metals, or may be formed by joining an n-type semiconductor and a p-type semiconductor together. The peltier element 31 has a characteristic such that heat is drawn and emitted on surfaces of the two metals, respectively, when DC power is supplied, so that the heat is transferred from a first end of the peltier element 31 to a second end of the peltier element 31.

The peltier element 31 has another characteristic such that position, where heat is drawn and emitted are reversed when the current direction of the DC power is changed, so that food put on the heat transferring member 32 may be heated or cooled.

The heat transferring member 32 is made of a metallic material with high heat conductivity so that the heat of the food and the heat of the peltier element 31 are easily transferred therethrough. The heat transferring member 32 protrudes from the upper surface of the casing 10 and has a flat upper surface to allow food to be put thereon.

A heat emitting member 33 and a ventilation fan 34 are sequentially mounted below the peltier element 31 to facilitate heat exchange between the peltier element 31 and surrounding air. The heat emitting member 33 is made of a metallic material, and includes a plurality of heat emitting pins 33a, thus increasing a contact area with air. The ventilation fan 34 generates a ventilation force and, therefore, discharges air heated or cooled by the peltier element 31 from the casing 10 to outside the casing 10 and draws external air so that the external air can be exchanged with the heat emitting member 33.

Meanwhile, an air inlet 13 that draws external air is provided in one side of the casing 10, and an air outlet 14, which discharges air that has exchanged heat with the heat emitting member 33, is provided in a bottom of the casing 10.

The cooking apparatus according to the embodiment of the present invention further includes a temperature sensor 35 that detects the temperature of the food so that the temperature adjusting unit 30 can be operated according to the temperature of the food.

One end of the temperature sensor 35 contacts the food, and, therefore, detects the temperature of the food put on the heat transferring member 32. A microcomputer (not shown) installed in the cooking apparatus compares the temperature detected by the temperature sensor 35 with a temperature set by a user through the temperature adjusting switch 12 to determine whether to supply DC power and to determine the current direction of the DC power.

Accordingly, after the user sets the temperature using the temperature adjusting switch 12, the food is heated or cooled while the current direction of the DC power supplied to the peltier element 31 is changed according to the temperature detected by the temperature sensor 35, so that the set temperature is maintained.

Although in the embodiment of the present embodiment, the cooking apparatus uses the induction heating-type heat generating unit 20, the present invention is not limited there to. The cooking apparatus may use a gas combustion-type heat generating unit that generates heat by burning gas, or an electric resistance-type heat generating unit with an electrical heating wire that generates heat by electric resistance.

Hereinafter, operations and effects of the cooking apparatus according to the present invention constructed as described above will be described.

When AC power is applied to the heat generating unit 20 by operating the heat generating switch 11 after food has been put on the heat generating member 21, a magnetic field is generated by the working coil, and, therefore, heat is generated in the container C that is made of a metallic material and contains the food, so that the food is heated and cooked.

When the food needs to be cooled after cooking has been completed, the container C containing the food is put on the heat transferring member 32 of the temperature adjusting unit 30, and a desired temperature of the food is set by operating the temperature adjusting switch 12.

If the temperature sensor 35 detects that a temperature of the container C containing the food put on the heat transferring member 32 is greater than the temperature set by the temperature adjusting switch 12, the microcomputer (not shown) allows DC power to be supplied to the peltier element 31. Accordingly, the heat of the food is drawn to the peltier element 31, discharged downward through the heat emitting member 33, and therefore cooled within a short time. The air around the heat emitting member 33 heated by the peltier element 31 is discharged to the outside of the casing 10 through the air outlet 14, and external air is supplied through the air inlet 13.

As the food is cooled and the temperature sensor 35 detects that the temperature of the container C containing the food has reached the set temperature, the microcomputer cuts off the DC power supplied to the peltier element 31, and, therefore, cooling of the food by the peltier element 31 is stopped.

Thereafter, as time passes if the food is cooled by heat exchange with the air and the temperature sensor 35 detects that the temperature of the food has decreased to a temperature lower than the set temperature, the microcomputer again allows the DC power to be supplied to the peltier element 31. In this case, the current direction of the DC power is reversed to heat the food, in contrast to the current direction when the food is cooled. Accordingly, the peltier element 31 draws heat on a bottom surface thereof, and transfers the heat to the food through the heat transferring member 32, thus increasing the temperature of the food by heating the food. The air around the heat emitting member 33 cooled by the peltier element 31 is discharged through the air outlet 14 by the ventilation fan 34, and new external air is supplied through the air inlet 13.

Therefore, the temperature of the food is continuously maintained at the temperature set by the user operating the temperature adjusting switch 12.

As is apparent from the above description, the present invention provides a cooking apparatus, which includes a temperature adjusting unit at one end thereof that draws heat from food, thereby cooling the food within a short time.

Additionally, the present invention provides a cooking apparatus, which includes a temperature adjusting switch and a temperature sensor, that heats and cools food by changing a current direction of DC power supplied to a peltier element according to a temperature set using the temperature adjusting switch and a temperature detected by the temperature sensor, thereby maintaining the temperature of the food at the set temperature.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A cooking apparatus, comprising:
a casing (10) forming an enclosure of the cooking apparatus; and
a temperature adjusting unit (30) mounted on the casing (10), with an upper portion thereof protruding from an upper surface of the casing (10) on which food is placed, wherein the temperature adjusting unit (30) exchanges heat with the food to heat or cool the food.

2. The cooking apparatus according to claim 1, wherein the temperature adjusting unit (30) comprises a peltier element (31) to draw heat at a first end thereof and emit the heat at a second end thereof.

3. The cooking apparatus according to claim 2, wherein the temperature adjusting unit (30) further comprises a heat transferring member (32) protruding from the upper surface of the casing (10) on which food is placed, the heat transferring member (32) drawing or emitting the heat according to an operation of the peltier element (31).

4. The cooking apparatus according to claim 2 or 3, wherein the temperature adjusting unit (30) further comprises:
a heat emitting member (33) mounted below the peltier element (31) to allow the heat to be exchanged between the peltier element (31) and air; and
a ventilation fan (34) mounted below the heat emitting member (33) to draw external air into the casing (10) by generating a ventilation force that exchanges the heat with the heat emitting member (33).

5. The cooking apparatus according to claim 2, 3 or 4, wherein the temperature adjusting unit (30) further comprises:
a temperature adjusting switch (12) to set a temperature of the food; and
a temperature sensor (35) to detect the temperature of the food.

6. The cooking apparatus according to any preceding claim, further comprising a heat generating unit (20) to cook the food by generating heat.

7. The cooking apparatus according to claim 6, wherein the heat generating unit (20) comprises a coil that is supplied with alternating current power and generates a magnetic field to heat the food by induction heating.

8. The cooking apparatus according to claim 6, wherein the heat generating unit (20) comprises an electrical heating wire to heat the food by electric resistance.

9. The cooking apparatus according to claim 6, wherein the heat generating unit (20) is a gas combustion heat generating unit (20) that generates the heat by burning gas.

10. The cooking apparatus according to claim 6, wherein the heat generating unit (20) heats the food by induction heating.

11. The cooking apparatus according to any of claims 3 to 10, wherein the heat transferring member (32) transfers the heat of the food to the peltier element (31) or transfers the heat of the peltier element (31) to the food.

12. The cooking apparatus according to any of claims 2 to 11, wherein when DC power is applied to the peltier element (31), positions at which the heat is drawn to, or emitted from, the peltier element (31) are reversed when a current direction of the DC power is changed.

13. The cooking apparatus according to any of claims 4 to 12, wherein the heat emitting member (33) comprises a plurality of heat emitting pins (33a) to increase a contact area with the air.

14. The cooking apparatus according to any of claims 4 to 13, further comprising an air inlet (13) in a side of the casing (10) that draws in external air, and an air outlet in a bottom of the casing (10) that discharges air that has exchanged heat with the heat emitting member (33) .

15. The cooking apparatus according to any of claims 5 to 14, wherein the temperature detected by the temperature sensor (35) is compared with the temperature set by the user using the temperature adjusting switch (12) to determine whether to supply DC power to the peltier element (31) and to determine a current direction of the DC power to maintain the temperature set by the user.

16. A temperature adjusting unit for a cooking apparatus, comprising:
a peltier element (31) drawing heat at a first end thereof and emitting the heat at a second end thereof;
a heat transferring member (32) protruding from an upper surface of the cooking apparatus on which food is placed, and drawing or emitting the heat according to operation of the peltier element (31); and
a heat emitting member (33) mounted below the peltier element (31) to enable the heat to be exchanged between the peltier element (31) and air.

17. The temperature adjusting unit according to claim 16, further comprising:
a ventilation fan (34) mounted below the heat emitting member (33) to draw external air into the cooking apparatus;
a temperature adjusting switch (12) to set a temperature of the food; and
a temperature sensor (35) to detect the temperature of the food.

18. The cooking apparatus according to claim 17, wherein the temperature detected by the temperature sensor (35) is compared with the temperature set by a user using the temperature adjusting switch (12) to determine whether to supply DC power to the peltier element (31) and to determine a current direction of the DC power to maintain the temperature set by the user.

19. The temperature adjusting unit according to any of claims 16 to 18, wherein the heat transferring member (32) transfers the heat of the food to the peltier element (31) or transfers the heat of the peltier element (31) to the food.

20. The temperature adjusting unit according to any of claims 16 to 19, wherein when DC power is applied to the peltier element (31), positions at which the heat is drawn to, or emitted from, the peltier element (31) are reversed when a current direction of the DC power is changed.

21. The temperature adjusting unit according to any of claims 16 to 20, wherein the heat emitting member (33) comprises a plurality of heat emitting pins (33a) to increase a contact area with the air.

22. A method of heating and cooling food in a container using a cooking apparatus having a heat generating unit (20) and a temperature adjusting unit (30) with a peltier element (31), the method comprising:
placing the container on the heat generating unit (20) and applying alternating current power to the heat generating unit (20) to heat the food in the container;
transferring the container from the heat generating unit (20) to the temperature adjusting unit (30) and setting a desired temperature of the food;
applying direct current (DC) power to the peltier element (31) when a temperature of the container becomes greater than the desired temperature to draw the heat of the food to the peltier element (31) to cool the food;
stopping the supply of DC power to the peltier element (31) when the temperature of the container reaches the desired temperature; and
applying the DC power to the peltier element (31) when the temperature of the container becomes less than the desired temperature, a current direction of the DC power reversing to transfer the heat of the peltier element (31) to the food to heat the food.
